# EUROPÄISCHE PATENTSCHRIFT

(11) **EP 2 563 677 B1**
(45) Veröffentlichungstag und Bekanntmachung des Hinweises auf die Patenterteilung: **12.07.2017**
(21) Anmeldenummer: 11718929.0
(22) Anmeldetag: 06.04.2011
(51) Int. Cl.: B65D 5/58, B31B 50/62, B31B 50/64, B31B 50/00, B29C 51/16, B65D 77/24

(54) **VERPACKUNGSBEHÄLTER MIT EINER ÄUSSEREN KARTONSTRUKTUR UND EINER EINLAGE AUS KUNSTSTOFFFOLIE**
PACKAGING CONTAINER COMPRISING AN OUTER CARDBOARD STRUCTURE AND AN INSERT MADE OF PLASTIC FILM
EMBALLAGE PRÉSENTANT UNE STRUCTURE EXTÉRIEURE EN CARTON ET UNE GARNITURE INTÉRIEURE COMPOSÉE D'UN FILM PLASTIQUE

(30) Priorität: 01.03.2011 DE 102011012759; 30.04.2010 DE 102010019098
(43) Veröffentlichungstag der Anmeldung: 06.03.2013
(60) Teilanmeldung: 16205523.0
(73) Patentinhaber: GEA Food Solutions Germany GmbH, 35216 Biedenkopf-Wallau (DE)
(72) Erfinder: MEYER, Klaus, 35236 Breidenbach (DE); MARTIN, Bernard, F-67610 La Wantzenau (FR)
(74) Vertreter: Wolff, Felix
(86) Internationale Anmeldenummer: PCT/EP2011/001707
(87) Internationale Veröffentlichungsnummer: WO 2011/134590

(56) Entgegenhaltungen:
- EP-A2- 0 283 145
- DE-U1- 20 208 068
- GB-A- 1 376 502
- US-A- 4 574 987

## Beschreibung

Die vorliegende Erfindung betrifft eine Verpackungsmulde mit einer äußeren Kartonstruktur, in der eine Einlage aus Kunststoff vorgesehen ist. Des Weiteren betrifft die vorliegende Erfindung ein Verfahren zur Herstellung einer derartigen Verpackungsmulde sowie eine Verpackungsmaschine, auf der die gattungsgemäße Verpackungsmulde sowie damit herzustellende Verpackungen produziert werden können.

Die gattungsgemäße Verpackungsmulde ist beispielsweise aus der FR2933329, der FR2826938, der FR2883223, der EP2097177A2, der FR2610595, der EP 0 283 145 A2 sowie der DE19602829 bekannt. Die dort beschriebenen Verpackungsmulden sind jedoch vergleichsweise schwer herzustellen und weisen insbesondere in ihrer Handhabung, insbesondere beim oder nach dem Erwärmen des Produktes in der Verpackung, Nachteile auf.

Es war deshalb die Aufgabe der vorliegenden Erfindung eine Verpackung zur Verfügung zu stellen, die die Nachteile des Standes der Technik nicht aufweist.

Gelöst wird die Aufgabe mit einer Verpackung gemäß Patentanspruch 1.

Die Offenbarung zu der Verpackung gilt für die anderen Erfindungsgegenstände dieser Patentanmeldung gleichermaßen und umgekehrt.

Die vorliegende Erfindung betrifft eine Verpackung mit einer äußeren Kartonstruktur. Der Karton, aus dem die Struktur gefertigt ist, kann ein ein- oder mehrlagiges Kartonmaterial sein. Das Kartonmaterial weist vorzugsweise Cellulose, Holzschliff und/oder Altpaier auf. Der Karton kann Lufteinschlüsse aufweisen. An seiner Innenseite kann das Kartonmaterial eine Beschichtung aufweisen, die es gegen Flüssigkeitseinflüsse und/oder Wasserdampf beständiger macht. Diese Schicht ist besonders bevorzugt siegelbar. Diese Kartonstruktur wird vorzugsweise durch Falten und gegebenenfalls anschließendem Stoffschluss, beispielsweise Kleben einer Kartonbahn oder eines Kartonzuschnitts hergestellt. Nach dem Falten kann die Kartonstruktur auch durch Form- und/oder Kraftschluss in ihrer gefalteten Struktur fixiert werden. In diese Kartonstruktur wird eine Einlage aus einer Kunststofffolie eingebracht. Bei der Kunststofffolie kann es sich um jede beliebige dem Fachmann im Bereich der Lebensmitteltechnik bekannten, tiefziehfähigen Kunststofffolie handeln, beispielsweise ist die Kunststofffolie eine Weich- oder Hartfolie aus PP, PA/PE, PVC, A-Pet oder einem sinnvollen Gemisch bzw. stoffschlüssig miteinander verbundenen Lagen aus diesen Komponenten.

Erfindungsgemäß ist nun insbesondere abschnittsweise zwischen der Kartonstruktur und der Einlage ein Gaspolster vorgesehen. Vorzugsweise handelt es sich bei dem Gaspolster um ein Luftpolster. Beispielsweise entsteht dieses Gaspolster dadurch, dass die Einlage anders als die Kartonstruktur geformt ist, so dass sich beim Zusammenfügen von Einlage und Kartonstruktur ein Abstand zwischen der Einlage und der Kartonstruktur einstellt, in dem sich Gas, insbesondere Luft, befindet. Dieser Abstand ist vorzugsweise größer als das übliche Tolleranzmaß, so dass sichergestellt ist, dass sich die Einlage und der Karton zumindest abschnittsweise nicht berühren auch wenn die Einlage gefüllt ist. Vorzugsweise beträgt der Abstand mehr als 0,5 mm besonders bevorzugt mehr als 1 mm, besonders bevorzugt mehr als 2,5 mm. Das Gaspolster kann aber auch in Form einer Struktur, beispielsweise einer Gaspolsterfolie oder einer Wellpappe oder Ähnlichem zur Verfügung gestellt werden. Dieses Gaspolster kann sich beispielsweise beim Erwärmen der Verpackung vergrößern. Vorzugsweise berührt die Einlage die Kartonstruktur im Bereich des Gaspolsters höchstens kleinflächig. Insbesondere ist die Anlagefläche zwischen der Einlage und der Kartonstruktur im Bereich der Gaspolster jedoch äußerst gering.

Vorzugsweise kann das Gaspolster zumindest abschnittsweise als Stauraum beispielsweise für ein Besteck und/oder ein Gewürz, mit dem ein Lebensmittel, das in die Einlage eingefüllt wird, gegessen bzw. gewürzt werden kann.

Gemäß einer bevorzugten Ausführungsform der Verpackungsmulde folgt die Kontur der Einlage zumindest abschnittsweise nicht der Kontur des Kartons. Dadurch ist sichergestellt, dass sich ein Abstand zwischen der Einlage und der Kartonstruktur bildet, in dem dann automatisch ein Gaspolster vorgesehen ist. Dieser Abstand ist vorzugsweise größer als das übliche Toleranzmaß, so dass sichergestellt ist, dass sich die Einlage und der Karton zumindest abschnittsweise nicht berühren auch wenn die Einlage gefüllt ist. Vorzugsweise beträgt der Abstand mehr als 0,5 mm besonders bevorzugt mehr als 1 mm, besonders bevorzugt mehr als 2,5 mm.

Erfindungsgemäß weist die Einlage eine Seitenwand auf, die sich entlang des gesamten Umfangs der Einlage erstreckt. Diese Seitenwand kann jede beliebige, dem Fachmann geläufige, Form aufweisen. Beispielsweise kann sie viereckig, oval oder rund vorgesehen sein. Vorzugsweise weist diese Seitenwand einen Versprung auf, so dass sich der Umfang der Einlage verjüngt, vorzugsweise sich vom Verpackungsrand zum Boden hin verjüngt. Dieser Versprung kann jede beliebige dem Fachmann geläufige Form aufweisen. Dieser Versprung wird vorzugsweise beim Verformen, vorzugsweise Tiefziehen, einer Folienbahn, aus der die Einlage hergestellt wird, in diese eingeformt. Die Kartonstruktur folgt dieser Verjüngung nicht oder nicht im selben Umfang, so dass sich zwischen der Einlage und der Kartonstruktur ein Abstand ergibt, im dem sich dann Gas befindet, das als Gaspolster wirkt und/oder als Stauraum genutzt werden kann.

Vorzugsweise befindet sich das Gaspolster zumindest abschnittsweise zwischen der Seitenwand der Einlage und der Seitenwand der Kartonstruktur. Vorzugsweise befindet sich das Gaspolster im unteren Bereich der Verpackungsmulde, insbesondere im unteren Bereich der Seitenwand und/oder zumindest teilweise im Bereich des Bodens. Ganz besonders bevorzugt befindet sich das Gaspolster im dem Bereich, der beim Ergreifen der Verpackungsmulde mit den Fingern und/oder mit der Handfläche in Berührung kommt. Vorzugsweise besteht das Gaspolster zumindest abschnittsweise auch noch nach dem Befüllen der Einlage mit dem Verpackungsgut.

In der Regel werden die Kartonstruktur und die Einlage stoffschlüssig miteinander Verbunden. Dieser Stoffschluss kann durch Kleben oder Siegeln erfolgen, wobei Siegeln bevorzugt wird. Vorzugsweise sind die Kartonstruktur und die Einlage im oberen Randbereich der Seitenwand stoffschlüssig miteinander verbunden. Dieser Stoffschluss wird vorzugsweise nur lokal und nicht um den gesamten Umfang umlaufend vorgesehen. Dadurch ist die Einlage zwar stabil und dauerhaft mit der Kartonstruktur verbunden, die Verbindung kann aber, zur Entsorgung der Verpackungsmulde, relativ leicht wieder gelöst werden. Weiterhin bevorzugt weist die erfindungsgemäße Verpackungsmulde eine Verbindungsstelle zwischen der Kartonstruktur und der Einlage im Bodenbereich der Verpackungsmulde auf.

Weiterhin bevorzugt weist die erfindungsgemäße Verpackungsmulde einen zweckmäßigen Stauraum zwischen der Kartonstruktur und der Einlage im Bodenbereich der Verpackungsmulde auf, beispielsweise zur Aufnahme von Hilfsmitteln wie Löffel oder Gabel oder Zubereitungsanleitungen für vorzugsweise Lebensmittel als Verpackungsgüter oder Montageanleitungen und/oder Werkzeuge für Verpackungsgüter wie beispielsweise Spielzeuge. Dieser Stauraum ist vorzugsweise ein Teil des Gaspolsters. Für den Zugriff auf diesen Stauraum weist die Kartonstruktur vorzugsweise ein Zugangsmittel auf. Ein derartiges Zugangsmittel ist beispielsweise mindestens eine beispielsweise durch teilweise Perforation oder selbsthaftende Folie leicht zu öffnende Klappe in der Kartonstruktur. Der Stauraum kann vorzugsweise alternativ oder zusätzlich eine Einlage aufnehmen, mit der die Einlage in der Kartonstruktur höhenverstellbar vorgesehen werden kann, beispielsweise auch zum Ausgleich von Abmessungstoleranzen, die durch das Verpackungsgut verursacht werden oder um eine Kartonstruktur für mehrere Einlagen verwenden zu können. Das Gaspolster muss aber zumindest teilweise erhalten bleiben.

Gemäß einer bevorzugten Ausführungsform ist die Wandstärke der Einlage in deren Bodenbereich geringer als im Bereich der Seitenwände. Vorzugsweise weist die Einlage einen Siegelrand auf. Dieser Siegelrand steht vorzugsweise senkrecht, insbesondere horizontal, von dem Seitenrand der Verpackungsmulde ab und/oder ist bei randloser Ausführung in den Bereich der Seitenwand integriert. Ebenso bevorzugt liegt der Siegelrand vollständig innerhalb der Kartonstruktur der Verpackungsmulde.

Nachdem die Verpackungsmulde mit dem Verpackungsgut gefüllt worden ist, wird die Verpackung mit einem Deckel verschlossen. Vorzugsweise wird der Deckel an den Siegelrand der Einlage gesiegelt.

Eine weitere Ausführungsform sieht einen zusätzlichen Kartondeckel vor, der beispielsweise zum Schutz der mit Folie verschlossenen Einlage dient. Der zusätzliche Deckel wird beispielsweise als separater Deckel mit der mit Folie verschlossenen Einlage und/oder mit der Kartonstruktur verbunden, beispielsweise aufgesteckt und/oder aufgesiegelt. Der zusätzliche Deckel kann aber auch, beispielsweise durch Perforation, faltbar an der Kartonstruktur vorgesehen sein. Das Anbringen des zusätzlichen Deckels erfolgt bevorzugt in der Siegelstation oder in einer separaten Station beispielsweise hinter der Siegelstation

Im Folgenden wird die Erfindung anhand der Figuren 1 - 3 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Verpackung.
- **Figur 2**: zeigt das Verbinden der Einlage mit dem Karton.
- **Figur 3**: zeigt die Verpackungsmaschine.

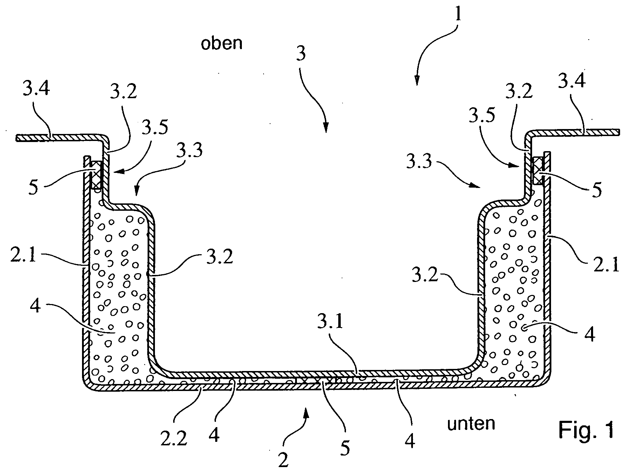

In Figur 1 ist die erfindungsgemäße Verpackung 1 dargestellt. Diese besteht aus einer äußeren Kartonstruktur 2 und einer Einlage 3. Die Kartonstruktur weist Seitenwände 2.1 und einen Boden 2.2 auf. Vorzugsweise wird die Kartonstruktur aus einem planen Karton hergestellt, in dem die Seitenwände 2.1 hochgeklappt und miteinander verklebt werden. Die Seitenwände 2.1 stehen vorzugsweise nicht senkrecht auf dem Boden sondern sind so angeordnet, dass sich der Querschnitt der Kartonstruktur von oben nach unten verjüngt, wodurch sich das Verbinden/Lösen der Klartonstruktur mit/von der Einlage vereinfacht. In dem vorliegenden Fall ist die Verpackungsmulde, d. h. auch insbesondere die Kartonstruktur viereckig, hier quadratisch vorgesehen. In der Kartonstruktur ist eine Einlage 3 vorgesehen, die einen Boden 3.1, eine Seitenwand 3.2 sowie einen Siegelrand 3.4 aufweist. An dem Siegelrand 3.4 kann die Verpackungsmulde stoffschlüssig mit einem Deckel (nicht dargestellt) zu einer fertigen Verpackung verschlossen werden, nachdem ein Verpackungsgut in die Einlage 3 der Verpackungsmulde eingefüllt worden ist. Die Einlage 3 ist an mindestens einer, hier vier, Verbindungsstellen 5 lokal jeweils mit der Seitenwand 2.1 der Kartonstruktur 2 verbunden. Diese Verbindung erfolgt vorzugsweise im oberen Randbereich 3.5 der Seitenwand, besonders bevorzugt jedoch außerhalb des Bereichs, in dem sich das Gaspolster befindet. In dem vorliegenden Fall sind in dem oberen Randbereich 3.5 vier Verbindungsstellen 5 vorgesehen, die vorzugsweise äquidistant angeordnet sind. Die Verbindung 5 zwischen der Einlage und dem Karton erfolgt vorzugsweise durch Siegeln. Bedarfsweise kann noch eine Verbindungsstelle 5 im Bodenbereich 2. 2, 3.1 vorgesehen sein, an der die Einlage dann ebenfalls durch Siegeln mit der Kartonstruktur verbunden ist. Erfindungsgemäß ist nun zwischen der Einlage 3 und der Kartonstruktur 2 zumindest abschnittsweise, d.h. lokal, ein Gaspolster 4 vorgesehen. Das Gaspolster 4 erstreckt sich in dem vorliegenden Fall im Randbereich, insbesondere umlaufend, zwischen der Seitenwand 2.1 der Kartonstruktur und der Seitenwand 3.2 der Einlage 3, insbesondere im unteren Bereich der Verpackungsmulde. Bedarfsweise ist auch im Bodenbereich 2.2, 3.1 zumindest lokal ein Gaspolster vorgesehen. Das Gaspolster weist in der Regel denselben Druck wie der Umgebungsdruck auf. Um den lokalen Abstand zwischen der Einlage 3 und der Kartonstruktur 2 zu erzeugen, weist die Seitenwand 3.2 der Einlage 3 hier einen Versprung 3.3 auf, so dass sich der Querschnitt der Einlage vom oberen Ende nach unten hin verjüngt. In dem vorliegenden Fall ist der Versprung im Wesentlichen rechtwinklig ausgeführt. Der Fachmann versteht jedoch, dass der Versprung jede beliebige andere Form aufweist, solang es nur dazu führt, dass sich ein Abstand zwischen der Seitenwand der Kartonstruktur und der Seitenwand der Einlage einstellt. Der hier dargestellte Versprung hat jedoch den Vorteil, dass er hier der Einlage 3 eine zusätzliche Formstabilität verleiht, die insbesondere beim Zusammenfügen von Kartonstruktur 2 und Einlage 3 vorteilhaft ist. Der Fachmann versteht, dass beispielsweise auch die Kartonstruktur einen Versprung aufweisen kann, um einen Abstand zwischen den Seitenwänden 2.1 3.2 zu erzeugen. Das Gaspolster 4 zwischen den Seitenwänden 2.1, 3.2 und ggf. zwischen den Bodenabschnitten 2.2, 3.1 hat den Vorteil, dass beim Erwärmen des Verpackungsgutes innerhalb der Verpackungsmulde, beispielsweise durch Mikrowellen, die Temperatur der Kartonstruktur zumindest zeitweise geringer ist als die Temperatur des Verpackungsgutes.

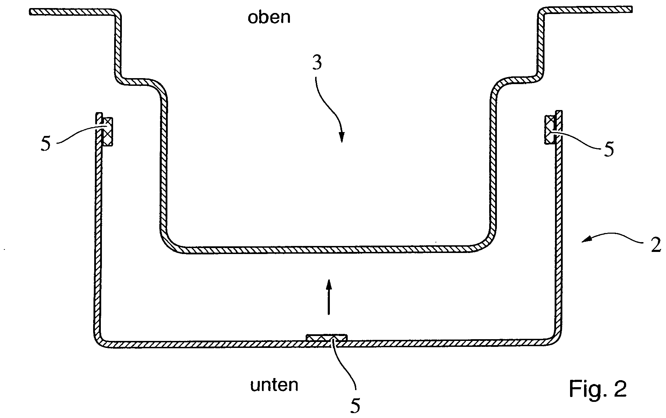

Figur 2 zeigt das Zusammenfügen der Einlage 3 und der Kartonstruktur 2. Es ist deutlich zu erkennen, das, bevor die Kartonstruktur 2 und die Einlage 3 miteinander verbunden werden, diese bereits ihre tiefgezogene Form aufweist. Erst nachdem die Einlage 3 in ihre im Wesentlichen abschließende Form gebracht worden ist, wird vorzugsweise von unten, wie durch den Pfeil dargestellt die Kartonstruktur auf die Einlage geschoben und/oder die Einlage 3 relativ zu der Kartonstruktur bewegt und sodann an den Verbindungsstellen 5 miteinander verbunden, wobei die Verbindungsstelle 5 im Bodenbereich nur optional vorhanden ist. Auch die Kartonstruktur weist vor dem Verbinden zumindest im Wesentlichen ihre abschließende Form auf.

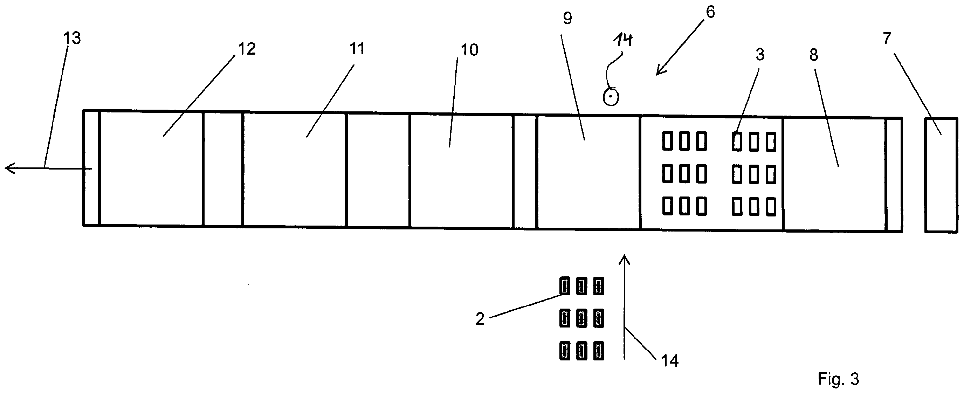

Figur 3 zeigt eine Verpackungsmaschine 6. Bei dieser Verpackungsmaschine handelt es sich um eine sogenannte Form-Fill-Seal-Maschine, bei der eine Folienbahn von einer Folienrolle 7 abgerollt und entlang der Verpackungsmaschine wie durch den Pfeil 13 symbolisiert, transportiert, insbesondere taktweise transportiert wird. Bei jedem Takt wird ein Format bestehend hier aus neun Einheiten gleichzeitig transportiert und gleichzeitig bearbeitet. In einem ersten Schritt werden bei jedem Takt jeweils neun Einlagen 3 in die Folienbahn, insbesondere durch Tiefziehen, eingeformt. Sodann wird dieses Format bestehend aus neun Einlagen taktweise weitertransportiert, bis es die Verbindungsstation 9 erreicht. Hier werden die Einlagen 3 jeweils mit einer Kartonstruktur 2 verbunden. Bei diesem Verfahrensschritt stehen die Einlagen 3 still oder die Einlagen bewegen sich. Zur Verbindung der Einlagen 3 mit den Kartonstrukturen 2, werden diese zunächst von einer von der Verpackungsmaschine entfernten Position unter die jeweilige Einlage positioniert und beispielsweise in einer Platte, die hier neuen Einbuchtungen aufweist positioniert. Die Kartonstrukturen 2 weisen dabei schon ihre dreidimensionale Form auf. Sodann werde die Kartonstrukturen 3 gleichzeitig angehoben und über die Einlagen 2 geschoben, bis sie ihre gewünschte Endposition relativ zur Einlage 3 erreicht haben. Anschließend erfolgt die stoffschlüssige Verbindung zwischen jeweils einer Einlage 3 und einer Kartonstruktur 2. Dies kann beispielsweise dadurch erfolgen, dass Siegelbacken von innen gegen die Einlage 3 gedrückt werden und dadurch die Einlage 3 mit der Kartonstruktur 2 verbinden. Dafür wird in der Regel, vorzugsweise auf der der Verpackungsmulde gegenüberliegenden Seite der Siegelbacken ein Widerlager benötigt, das vorzugsweise in der Platte vorgesehen ist und ganz besonders bevorzugt zumindest teilweise elastisch, beispielsweise gummiert, vorgesehen ist. Sowohl die Bewegung der Kartonstrukturen unter die Einlagen 3 als auch deren Anhebung zum Verbinden der Einlagen mit der Kartonstruktur erfolgt vorzugsweise durch Bewegungen, die senkrecht zur ersten Transportrichtung 13 der Einlagen 3 und/oder senkrecht zueinander vorgesehen sind. Danach werden die jetzt miteinander verbundenen Einlagen und die Kartonstrukturen taktweise zu einer Einlegestation 10 transportiert, in der jede Verpackungsmulde 1 mit einem Verpackungsgut befüllt wird. Anschließend wird die so fertiggestellte Verpackungsmulde mit einem Deckel in der Siegelstation 11 verschlossen, der vorzugsweise an den Siegelrand unter Druck- und/oder Temperatureinfluss gesiegelt wird. Vor und/oder beim Verschließen der Verpackungsmulde kann ein Gasaustausch in der Verpackungsmulde erfolgen. Bei der Deckelfolie kann es sich um eine sogenannte Skinfolie handeln. Anschließend werden die so fertiggestellten Verpackungen in einer Vereinzelungsstation 12 vereinzelt, in dem die Kunststofffolienbahn, aus der die Einlagen 3 hergestellt worden sind und die Deckelfolienbahn, rund um die Einlagen auseinandergeschnitten werden.

### Bezugszeichenliste:

- 1: Verpackungsmulde
- 2: äußere Kartonstruktur
- 2.1: Seitenwand
- 2.2: Boden
- 3: Einlage aus Kunststofffolie
- 3.1: Boden
- 3.2: Seitenwand
- 3.3: Versprung
- 3.4: Siegelrand
- 3.5: oberer Randbereich der Seitenwand
- 4: Gaspolster, Luft
- 5: Verbindungsstelle
- 6: Verpackungsmaschine
- 7: Folienrolle
- 8: Tiefziehstation
- 9: Verbindungsstation
- 10: Einlegestation
- 11: Siegelstation
- 12: Vereinzelungsstation
- 13: erste Transportrichtung
- 14: zweite Transportrichtung

## Patentansprüche

1. Verpackung (1) mit einer äußeren Kartonstruktur (2) mit Seitenwänden (2.1), einem Boden (2.2), in der eine Einlage (3) aus Kunststofffolie vorgesehen ist, die einen Boden 3.1, eine Seitenwand (3.2) und einen Siegelrand (3.4) aufweist, an dem stoffschlüssig ein Deckel vorgesehen ist, wobei zwischen der Kartonstruktur (2) und der Einlage (3) zumindest abschnittsweise ein Gaspolster (4) vorgesehen ist, **dadurch gekennzeichnet, dass** die Kartonstruktur (2) aus einem planen Karton durch Hochklappen der Seitenwände (21) hergestellt ist, wobei die Seitenwände miteinander verbunden sind und die Einlage unterhalb ihres Siegelrandes (3.4) mit dem oberen Randbereich (3.5) der Seitenwand der Kartonstruktur stoffschlüssig verbunden ist, wobei der Stoffschluss nur lokal und nicht um den gesamten Umfang umlaufend vorgesehen ist.

2. Verpackung nach Patentanspruch 1, **dadurch gekennzeichnet, dass** die Kontur der Einlage (3) zumindest abschnittsweise nicht der Kontur des Kartons folgt, und in der Seitenwand ein Versprung (3.3) vorgesehen ist.

3. Verpackung nach einem der voranstehenden Patentansprüche, **dadurch gekennzeichnet, dass** die Wandstärke der Einlage (2) im Bodenbereich (3.1) geringer ist als im Bereich der Seitenwand (3.2).

4. Verpackung nach einem der Patentansprüche 1 bis 3, **dadurch gekennzeichnet, dass** die Verpackungsmulde (1) zumindest abschnittsweise einen Stauraum zwischen der Kartonstruktur (2) und der Einlage (3) insbesondere im Bodenbereich (3.1) der Verpackungsmulde aufweist.

5. Verpackung nach Patentanspruch 4, **dadurch gekennzeichnet, dass** in der Kartonstruktur (2) im Bereich des Stauraums, vorzugsweise im Bodenbereich (3.1), ein Mittel zum Öffnen der Kartonstruktur vorgesehen ist, um Zugriff zu dem Stauraum zu erhalten.

6. Verpackung nach einem der Patentansprüche 5 oder 6, **dadurch gekennzeichnet, dass** in dem Stauraum ein Hilfsmittel und/oder ein Essensbestandteil angeordnet ist.

## Claims

1. Packaging (1) comprising an outer cardboard structure (2) having side walls (2.1), a base (2.2), in which an insert (3) made of plastic film is provided, which insert has a base (3.1), a side wall (3.2) and a sealing edge (3.4) on which a lid is provided in an integrally bonded manner, wherein a gas cushion (4) is provided between the cardboard structure (2) and the insert (3), at least over portions, **characterized in that** the cardboard structure (2) is produced from a planar cardboard by virtue of the side walls (21) being folded upwards, wherein the side walls are connected to one another and the insert is, below its sealing edge (3.4), connected in an integrally bonded manner to the upper edge region (3.5) of the side wall of the cardboard structure, wherein the integral bonding is provided only locally and not in an encircling manner over the entire circumference.

2. Packaging according to Patent Claim 1, **characterized in that** the contour of the insert (3) does not follow the contour of the cardboard, at least over portions, and a step (3.3) is provided in the side wall.

3. Packaging according to one of the preceding patent claims, **characterized in that** the wall thickness of the insert (2) in the base region (3.1) is smaller than in the region of the side wall (3.2).

4. Packaging according to one of Patent Claims 1 to 3, **characterized in that** the packaging tray (1) has a storage space, at least over portions, between the cardboard structure (2) and the insert (3), in particular in the base region (3.1) of the packaging tray.

5. Packaging according to Patent Claim 4, **characterized in that** a means for opening the cardboard structure is provided in the cardboard structure (2) in the region of the storage space, preferably in the base region (3.1), so as to obtain access to the storage space.

6. Packaging according to one of Patent Claims 5 or 6, **characterized in that** an aid and/or a meal component is arranged in the storage space.

## Revendications

1. Emballage (1) comprenant une structure en carton extérieure (2) avec des parois latérales (2.1), un fond (2.2), dans lequel est prévu un insert (3) en film plastique, qui présente un fond (3.1), une paroi latérale (3.2) et un bord de scellement (3.4), au niveau duquel est prévu par engagement par liaison de matière un couvercle, un coussin de gaz (4) étant prévu au moins en partie entre la structure en carton (2) et l'insert (3), **caractérisé en ce que** la structure en carton (2) est fabriquée à partir d'un carton plan par redressement des parois latérales (21), les parois latérales étant assemblées les unes aux autres et l'insert étant connecté par engagement par liaison de matière en dessous de son bord de scellement (3.4) à la région de bord supérieure (3.5) de la paroi latérale de la structure en carton, la liaison de matière n'étant prévue sur le pourtour que localement et pas sur toute la périphérie.

2. Emballage selon la revendication 1, **caractérisé en ce que** le contour de l'insert (3), au moins en partie, ne suit pas le contour du carton, et un décrochement (3.3) est prévu dans la paroi latérale.

3. Emballage selon l'une quelconque des revendications précédentes, **caractérisé en ce que** l'épaisseur de paroi de l'insert (2) dans la région du fond (3.1) est inférieure à son épaisseur dans la région de la paroi latérale (3.2).

4. Emballage selon l'une quelconque des revendications 1 à 3, **caractérisé en ce que** le creux d'emballage (1) présente au moins en partie un espace de rangement entre la structure en carton (2) et l'insert (3), en particulier dans la région du fond (3.1) du creux d'emballage.

5. Emballage selon la revendication 4, **caractérisé en ce qu'**un moyen pour ouvrir la structure en carton est prévu dans la structure en carton (2) dans la région de l'espace de rangement, de préférence dans la région du fond (3.1), afin de pouvoir accéder à l'espace de rangement.

6. Emballage selon l'une quelconque des revendications 5 ou 6, **caractérisé en ce qu'**un accessoire et/ou un constituant alimentaire est disposé dans l'espace de rangement.
